(19)

**Europäisches Patentamt**
**European Patent Office**
**Office européen des brevets**

(11) **EP 4 053 668 B1**

(12) **EUROPEAN PATENT SPECIFICATION**

(45) Date of publication and mention
of the grant of the patent:
**09.10.2024 Bulletin 2024/41**

(21) Application number: **21761961.8**

(22) Date of filing: **25.01.2021**

(51) International Patent Classification (IPC):
**G05D 23/19** *(2006.01)* **F24H 4/02** *(2022.01)*
**F24H 9/20** *(2022.01)* **F25B 49/00** *(2006.01)*

(52) Cooperative Patent Classification (CPC):
**G05D 23/1919; E04H 4/129; F24H 9/2014;**
**F24H 15/156; F24H 15/258;** F24H 4/02

(86) International application number:
**PCT/CN2021/073514**

(87) International publication number:
**WO 2022/155940 (28.07.2022 Gazette 2022/30)**

(54) **WATER TEMPERATURE CONTROL METHOD FOR SWIMMING POOL HEAT PUMP SYSTEM, APPARATUS, DEVICE, AND STORAGE MEDIUM**

VERFAHREN, GERÄT UND VORRICHTUNG ZUR WASSERTEMPERATURREGELUNG FÜR EIN SCHWIMMBECKENWÄRMEPUMPENSYSTEM SOWIE SPEICHERMEDIUM

PROCÉDÉ DE RÉGULATION DE LA TEMPÉRATURE DE L'EAU POUR SYSTÈME DE POMPE À CHALEUR DE PISCINE, APPAREIL, DISPOSITIF ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.09.2022 Bulletin 2022/36**

(73) Proprietor: **GUANGDONG PHNIX ECO-ENERGY SOLUTION LTD.**
**Guangzhou, Guangdong 511400 (CN)**

(72) Inventors:
• **LIU, Zhili**
**Guangzhou, Guangdong 511470 (CN)**
• **LEI, Pengfei**
**Guangzhou, Guangdong 511470 (CN)**
• **ZHANG, Li**
**Guangzhou, Guangdong 511470 (CN)**
• **YE, Jingfa**
**Guangzhou, Guangdong 511470 (CN)**

• **LI, Caoxuan**
**Guangzhou, Guangdong 511470 (CN)**
• **CAI, Pengcheng**
**Guangzhou, Guangdong 511470 (CN)**
• **LUO, Sen**
**Guangzhou, Guangdong 511470 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(56) References cited:
CN-A- 101 424 132    CN-A- 105 674 574
CN-A- 106 642 303    CN-A- 106 766 214
CN-A- 107 300 231    CN-A- 112 178 993
CN-U- 204 494 893    CN-Y- 201 351 998
KR-B1- 101 777 711

## Description

TECHNICAL FIELD

The present invention relates to the field of heat pump technologies, and in particular, to a water temperature control method, apparatus, and device for a swimming pool heat pump system, and a storage medium.

BACKGROUND

When an outdoor swimming pool is in use, a water temperature thereof is usually too cold or too hot, and user experience is poor. Therefore, a heating device needs to heat water in the swimming pool and keep a constant temperature that a human body feels comfortable. Previously, a device that heats a swimming pool usually uses chemical combustion or electric heating. However, due to problems of high energy consumption, pollution, and electric safety, such device is gradually replaced by a swimming pool heat pump. Because the heat pump can reabsorb heat in the air, by using the reversed Carnot principle, only a small quantity of electric power is required to transfer heat to water in the swimming pool, and energy consumption is greatly reduced. Therefore, the heat pump is popularized.

However, because the swimming pool heat pump uses a compressor system, a compressor and a fan cause energy consumption and noise problems. The conventional compressor system has high energy consumption and does not function well to control the water temperature. CN201351998Y discloses a swimming pool constant temperature system of an air-source heat pump water heater, which comprises a refrigerating system host, a heat storage and heat insulation water tank, a hot water circulation pipe, a returned water heating pipe, a swimming pool, a swimming pool temperature sensor and a controller; the controller collects and judges the water level and the temperature in the heat storage and heat insulation water tank and the swimming pool in real time, controls the operation of a circulating water pump, ball valves, solenoid valves and the host; the hot water circulation pipe is provided with a first ball valve, a target flow switch, a first circulating water pump, a first water filter, a soft water treatment system and a second ball valve; the heat storage and heat insulation water tank adopts a non-pressure structure, and is provided with a returned water coil heat exchanger, a water tank temperature sensor, a high-water-levels witch and a low-water-level switch; the closed returned water heating pipe is provided with a second circulating water pump, a second water filter and a sewage treatment system; the heat storage and heat insulation water tank and a third circulating water pump are connected with the swimming pool through a water inlet solenoid valve; and the heat storage and heat insulation water tank is connected with a tap water pipe by a water replenishing solenoid valve. CN107300231A discloses a heat pump unit and a control method and device thereof. The control method includes: acquiring outdoor environment temperature and the operation mode of the heat pump unit; acquiring the initial flow of a variable-frequency water pump according to the outdoor environment temperature and the operation mode of the heat pump unit, and controlling variable-frequency water pump to output according to the initial flow; acquiring the water temperature difference between the target water outlet temperature of the heat pump unit and the actual water outlet temperature of the heat pump unit, and regulating the operation frequency of a variable-frequency compressor according to the water temperature difference; during the regulating of the operation frequency of the variable-frequency compressor, judging whether the absolute value of water inlet and outlet temperature difference is larger than a preset value or not; if so, regulating the output of the variable-frequency water pump according to the absolute value of the water inlet and outlet temperature difference, and stopping the regulating of the operation frequency of the variable-frequency compressor.

SUMMARY

The present invention provides a water temperature control method, apparatus, and device for a swimming pool heat pump system, and a storage medium, so as to adjust a water temperature of a swimming pool according to an external ambient temperature, increase a coefficient of performance during operation of the swimming pool heat pump system, reduce energy consumption, avoid frequent opening and closing of the swimming pool heat pump system, and increase a service life of the swimming pool heat pump system.

A first aspect of embodiments of the present invention provides a water temperature control method for a swimming pool heat pump system, including: obtaining an external ambient temperature and adjusting a heating temperature according to the external ambient temperature to obtain a target heating temperature; detecting an inlet water temperature of the swimming pool heat pump system, and determining an absolute value of a temperature difference between the inlet water temperature and the target heating temperature; and determining a target operating frequency band of the swimming pool heat pump system according to the absolute value of the temperature difference, controlling an inverter compressor in the swimming pool heat pump system to heat water in a to-be-heated container based on the target operating frequency band, and placing heated water in the to-be-heated container into the swimming pool by using a circulating pump.

The obtaining an external ambient temperature and adjusting a heating temperature according to the external ambient temperature to obtain a target heating temperature includes: detecting a current external ambient temperature by using a preset ambient temperature sensor; if the external ambient temperature is less than or equal to a first ambient temperature threshold, determining a first preset temperature as the target heating temperature; if the external ambient temperature is greater than the first ambient temperature threshold and is less than or equal to a second ambient temperature threshold, determining a corresponding target heating temperature according to a preset curve, where the preset curve is used to indicate an inverse ratio relationship between the target heating temperature and the ambient temperature; and if the external ambient temperature is greater than the second ambient temperature threshold, determining a second preset temperature as the target heating temperature, where the second preset temperature is less than the first preset temperature.

A slope of the preset curve is $K$,

$$K = \frac{TT1 - TT2}{AT1 - AT2}$$

, where $TT1$ is the first preset temperature, $TT2$ is the second preset temperature, $AT1$ is the first ambient temperature threshold, and $AT2$ is the second ambient temperature threshold.

Optionally, in a third implementation of the first aspect of the embodiments of the present invention, the determining a target operating frequency band of the swimming pool heat pump system according to the absolute value of the temperature difference, controlling the inverter compressor in the swimming pool heat pump system to heat water in a to-be-heated container based on the target operating frequency band, and placing heated water in the to-be-heated container into the swimming pool by using a circulating pump includes: determining whether the absolute value of the temperature difference is less than a first temperature difference threshold; if the absolute value of the temperature difference is greater than or equal to the first temperature difference threshold, determining that the inverter compressor in the swimming pool heat pump system enters a fast heating stage, where the fast heating stage is used to indicate that the target operating frequency band of the swimming pool heat pump system is a high-frequency operating frequency band; if the absolute value of the temperature difference is less than the first temperature difference threshold, determining whether the absolute value of the temperature difference is less than a second temperature difference threshold; if the absolute value of the temperature difference is greater than or equal to the second temperature difference threshold, determining that the inverter compressor in the swimming pool heat pump system enters an energy-saving heating stage, where the energy-saving heating stage is used to indicate that the target operating frequency band of the swimming pool heat pump system is an intermediate-frequency operating frequency band; if the absolute value of the temperature difference is less than the second temperature difference threshold, determining that the inverter compressor in the swimming pool heat pump system enters a constant temperature maintenance stage, where the constant temperature maintenance stage is used to indicate that the target operating frequency band of the swimming pool heat pump system is a low-frequency operating frequency band; and controlling the inverter compressor to heat the water in the to-be-heated container based on the high-frequency operating frequency band, the intermediate-frequency operating frequency band, or the low-frequency operating frequency band, and placing the heated water in the to-be-heated container into the swimming pool by using the circulating pump.

Optionally, in a fourth implementation of the first aspect of the embodiments of the present invention, the first temperature difference threshold is 3°C, and the second temperature difference threshold is 0.5°C.

Optionally, in a fifth implementation of the first aspect of the embodiments of the present invention, the controlling the inverter compressor to heat the water in the to-be-heated container based on the high-frequency operating frequency band, the intermediate-frequency operating frequency band, or the low-frequency operating frequency band, and placing the heated water in the to-be-heated container into the swimming pool by using the circulating pump includes: adjusting a real-time operating frequency of the inverter compressor according to a change of the absolute value of the temperature difference, and heating the water in the to-be-heated container according to the real-time operating frequency, where the real-time operating frequency is the high-frequency operating frequency band, the intermediate-frequency operating frequency band, or the low-frequency operating frequency band; when the inverter compressor operates in the high-frequency operating frequency band, determining that a value range of a current heat production amount of the swimming pool heat pump system is [0.8Q, 1.2Q], and a value range of a coefficient of performance (COP) corresponding to the swimming pool heat pump system is $4 \leq COP \leq 5$, where Q is a maximum heat production amount of the swimming pool heat pump system; when the inverter compressor operates in the intermediate-frequency operating frequency band, determining that the value range of the current heat production amount of the swimming pool heat pump system is (0.4Q, 0.8Q), and the value range of the coefficient of performance (COP) corresponding to the swimming pool heat pump system is $5 < COP < 7$; and when the inverter compressor operates in the low-frequency operating frequency band, determining that the value range of the current heat production amount of the swimming pool heat pump system is [0.05Q, 0.4Q], and the value range of the coefficient of performance (COP) corresponding to the swimming pool heat pump system is $7 \leq COP \leq 8$.

Optionally, in a sixth implementation of the first aspect of the embodiments of the present invention, when the inverter compressor operates in the low-frequency operating frequency band, the inverter compressor keeps operating.

A second aspect of the embodiments of the present invention provides a water temperature control apparatus for a swimming pool heat pump system, including: an obtaining and adjustment module, configured to obtain an external ambient temperature and adjust a heating temperature according to the external ambient temperature to obtain a target heating temperature; a detection and determining module, configured to: detect an inlet water temperature of the swimming pool heat pump system, and determine an absolute value of a temperature difference between the inlet water temperature and the target heating temperature; and a determining and control module, configured to: determine a target operating frequency band of the swimming pool heat pump system according to the absolute value of the temperature difference, control the inverter compressor in the swimming pool heat pump system to heat water in a to-be-heated container based on the target operating frequency band, and place heated water in the to-be-heated container into the swimming pool by using a circulating pump.

The obtaining and adjustment module is specifically configured to: detect a current external ambient temperature by using a preset ambient temperature sensor; if the external ambient temperature is less than or equal to a first ambient temperature threshold, determine a first preset temperature as the target heating temperature; if the external ambient temperature is greater than the first ambient temperature threshold and is less than or equal to a second ambient temperature threshold, determine a corresponding target heating temperature according to a preset curve, where the preset curve is used to indicate an inverse ratio relationship between the target heating temperature and the ambient temperature; and if the external ambient temperature is greater than the second ambient temperature threshold, determine a second preset temperature as the target heating temperature, where the second preset temperature is less than the first preset temperature.

A slope of the preset curve is $K$,

$$K = \frac{TT1 - TT2}{AT1 - AT2}$$

, where $TT1$ is the first preset temperature, $TT2$ is the second preset temperature, $AT1$ is the first ambient temperature threshold, and $AT2$ is the second ambient temperature threshold.

Optionally, in a third implementation of the second aspect of the embodiments of the present invention, the determining and control module includes: a first judgement unit, configured to determine whether the absolute value of the temperature difference is less than a first temperature difference threshold; a first determining unit, configured to: if the absolute value of the temperature difference is greater than or equal to the first temperature difference threshold, determine that the inverter compressor in the swimming pool heat pump system enters a fast heating stage, where the fast heating stage is used to indicate that the target operating frequency band of the swimming pool heat pump system is a high-frequency operating frequency band; a second judgment unit, configured to: if the absolute value of the temperature difference is less than the first temperature difference threshold, determine whether the absolute value of the temperature difference is less than a second temperature difference threshold; a second determining unit, configured to: if the absolute value of the temperature difference is greater than or equal to the second temperature difference threshold, determine that the inverter compressor in the swimming pool heat pump system enters an energy-saving heating stage, where the energy-saving heating stage is used to indicate that the target operating frequency band of the swimming pool heat pump system is an intermediate-frequency operating frequency band; a third determining unit, configured to: if the absolute value of the temperature difference is less than the second temperature difference threshold, determine that the inverter compressor in the swimming pool heat pump system enters a constant temperature maintenance stage, where the constant temperature maintenance stage is used to indicate that the target operating frequency band of the swimming pool heat pump system is a low-frequency operating frequency band; and a heating unit, configured to control the inverter compressor to heat the water in the to-be-heated container based on the high-frequency operating frequency band, the intermediate-frequency operating frequency band, or the low-frequency operating frequency band, and place the heated water in the to-be-heated container into the swimming pool by using the circulating pump.

Optionally, in a fourth implementation of the second aspect of the embodiments of the present invention, the first temperature difference threshold is 3°C, and the second temperature difference threshold is 0.5°C.

Optionally, in a fifth implementation of the second aspect of the embodiments of the present invention, the heating unit is specifically configured to: adjust a real-time operating frequency of the inverter compressor according to a change of the absolute value of the temperature difference, and heat the water in the to-be-heated container according to the real-time operating frequency, where the real-time operating frequency is the high-frequency operating frequency band, the intermediate-frequency operating frequency band, or the low-frequency operating frequency band; when the inverter compressor operates in the high-frequency operating frequency band, determine that a value range of a current heat production amount of the swimming pool heat pump system is [0.8Q, 1.2Q], and a value range of a coefficient of performance (COP) corresponding to the swimming pool heat pump system is $4 \le COP \le 5$, where Q is a maximum heat production amount of the swimming pool heat pump system; when the inverter compressor operates in the intermediate-frequency operating frequency band, determine that the value range of the current heat production amount of the swimming pool heat pump system is (0.4Q, 0.8Q), and the value range of the coefficient of performance (COP) corresponding to the swimming pool heat pump system is $5 < COP \leq 7$ ; and when the inverter compressor operates in the low-frequency operating frequency band, determine that the value range of the current heat production amount of the swimming pool heat pump system is [0.05Q, 0.4Q], and the value range of the coefficient of performance (COP) corresponding to the swimming pool heat pump system is $7 \leq COP \leq 8$.

Optionally, in a sixth implementation of the second aspect of the embodiments of the present invention, when the inverter compressor operates in the low-frequency operating frequency band, the inverter compressor keeps operating.

A third aspect of the embodiments of the present invention provides a water temperature control device for a swimming pool heat pump system, a memory, and at least one processor, where the memory stores instructions, and the memory and the at least one processor are interconnected by using a line; the at least one processor invokes the instructions in the memory, so that the water temperature control device for a swimming pool heat pump system performs the water temperature control method for a swimming pool heat pump system.

A fourth aspect of the embodiments of the present invention provides a computer readable storage medium, where the computer readable storage medium stores instructions, and when the instructions are executed by a processor, steps of the water temperature control method for a swimming pool heat pump system in any one of the foregoing implementations are implemented.

The technical solutions provided in the embodiments of the present invention include: obtaining an external ambient temperature and adjusting a heating temperature according to the external ambient temperature to obtain a target heating temperature; detecting an inlet water temperature of the swimming pool heat pump system, and determining an absolute value of a temperature difference between the inlet water temperature and the target heating temperature; and determining a target operating frequency band of the swimming pool heat pump system according to the absolute value of the temperature difference, controlling an inverter compressor in the swimming pool heat pump system to heat water in a to-be-heated container based on the target operating frequency band, and placing heated water in the to-be-heated container into the swimming pool by using a circulating pump. In the embodiments of the present invention, the target heating temperature is adjusted according to the external ambient temperature, and the swimming pool water temperature is further adjusted according to the standard heating temperature, so as to increase a coefficient of performance of the swimming pool heat pump system during operation, reduce energy consumption, avoid frequent opening and closing of the swimming pool heat pump system, and increase a service life of the swimming pool heat pump system.

BRIEF DESCRIPTION OF DRAWINGS

FIG. 1 is a schematic diagram of an embodiment of a water temperature control method for a swimming pool heat pump system according to an embodiment of the present invention;
FIG. 2 is a schematic diagram of another embodiment of a water temperature control method for a swimming pool heat pump system according to an embodiment of the present invention;
FIG. 3 is a schematic diagram of a preset curve according to an embodiment of the present invention;
FIG. 4 is a schematic diagram of a relationship between a coefficient of performance (COP) and a frequency according to an embodiment of the present invention;
FIG. 5 is a schematic diagram of an embodiment of a water temperature control apparatus for a swimming pool heat pump system according to an embodiment of the present invention;
FIG. 6 is a schematic diagram of another embodiment of a water temperature control apparatus for a swimming pool heat pump system according to an embodiment of the present invention; and
FIG. 7 is a schematic diagram of an embodiment of a water temperature control device for a swimming pool heat pump system according to an embodiment of the present invention.

DESCRIPTION OF EMBODIMENTS

The present invention provides a water temperature control method, apparatus, and device for a swimming pool heat pump system, and a storage medium, so as to adjust a water temperature of a swimming pool according to an external ambient temperature, increase a coefficient of performance during operation of the swimming pool heat pump system, reduce energy consumption, avoid frequent opening and closing of the swimming pool heat pump system, and increase a service life of the swimming pool heat pump system.

To make persons skilled in the art better understand the solutions in the present invention, the following describes the embodiments of the present invention with reference to the accompanying drawings in the embodiments of the present invention.

In the specification, claims, and accompanying drawings of the present invention, the terms "first", "second", "third", "fourth", and so on (if any) are intended to distinguish between similar objects but do not necessarily indicate a specific order or sequence. It should be understood that the terms used in such a way are interchangeable in proper circumstances, so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

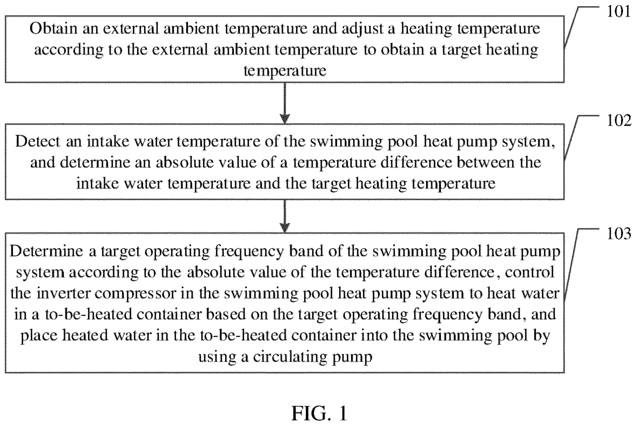

FIG. 1 is a flowchart of a water temperature control method for a swimming pool heat pump system according to an embodiment of the present invention, specifically including:

101. Obtain an external ambient temperature and adjust a heating temperature according to the external ambient temperature to obtain a target heating temperature.

A terminal obtains the external ambient temperature and adjusts the heating temperature according to the external ambient temperature to obtain the target heating temperature.

It should be noted that the heat pump system may be applied to a swimming pool water heating scenario, and the target heating temperature is adjusted in real time for a swimming pool internal water temperature and the external ambient temperature to meet a use requirement. 1. Before a swimming pool is put into use, the swimming pool internal water temperature is relatively low. In this case, there are two types of requirements. One is that the temperature inside the swimming pool is expected to reach a specified temperature as quickly as possible. The other is scheduled heating, where duration may be relatively long, and energy consumption is expected to be low. 2. The swimming pool water temperature heated by the swimming pool heat pump can fluctuate slightly, so that a human body feels comfortable. 3. The swimming pool water temperature can be adjusted automatically according to the external ambient temperature. For example, when the external ambient temperature is relatively high (that is, the weather is relatively hot), the water temperature may be set to be slightly lower than the usual temperature, so that the human body can feel more comfortable and energy can be saved. When the ambient temperature is relatively low (that is, the weather is relatively cold), the target heating temperature may be set to be higher than the usual temperature.

It may be understood that the execution body of the present invention may be a water temperature control apparatus for a swimming pool heat pump system, or may be a terminal, which is not specifically limited herein. In this embodiment of the present invention, that the terminal is an execution body is used as an example for description.

102. Detect an inlet water temperature of the swimming pool heat pump system, and determine an absolute value of a temperature difference between the inlet water temperature and the target heating temperature.

The terminal detects the inlet water temperature of the swimming pool heat pump system, and determines the absolute value of the temperature difference between the inlet water temperature and the target heating temperature. The absolute value of the temperature difference is an absolute value of a difference obtained by subtracting the inlet water temperature from the target heating temperature.

It may be understood that different absolute values of temperature differences also correspond to different operating frequencies of the heat pump system. Therefore, different heating manners are separately delimited by setting different temperature difference ranges.

103. Determine a target operating frequency band of the swimming pool heat pump system according to the absolute value of the temperature difference, control the inverter compressor in the swimming pool heat pump system to heat water in a to-be-heated container based on the target operating frequency band, and place heated water in the to-be-heated container into the swimming pool by using a circulating pump.

Specifically, if the absolute value of the temperature difference is greater than or equal to a first temperature difference threshold, the terminal determines that the inverter compressor in the swimming pool heat pump system enters a fast heating stage, where the fast heating stage is used to indicate that the target operating frequency band of the swimming pool heat pump system is a high-frequency operating frequency band. If the absolute value of the temperature difference is greater than or equal to a second temperature difference threshold and is less than the first temperature difference threshold, the terminal determines that the inverter compressor enters an energy-saving heating stage, where the energy-saving heating stage is used to indicate that the target operating frequency band of the swimming pool heat pump system is an intermediate-frequency operating frequency band. If the absolute value of the temperature difference is less than the second temperature difference threshold, the terminal determines that the inverter compressor enters a constant temperature maintenance stage, where the constant temperature maintenance stage is used to indicate that the target operating frequency band of the swimming pool heat pump system is a low-frequency operating frequency band. The terminal controls the inverter compressor to heat the water in the to-be-heated container based on the high-frequency operating frequency band, the intermediate-frequency operating frequency band, or the low-frequency operating frequency band, and then places the heated water in the to-be-heated container into the swimming pool by using the circulating pump, so as to continuously increase the water temperature in the swimming pool, so that the water temperature in the swimming pool is maintained at the target heating temperature.

In this embodiment of the present invention, the target heating temperature is adjusted according to the external ambient temperature, and the swimming pool water temperature is further adjusted according to the standard heating temperature, so as to increase a coefficient of performance of the swimming pool heat pump system during operation, reduce energy consumption, avoid frequent opening and closing of the swimming pool heat pump system, and increase a service life of the swimming pool heat pump system.

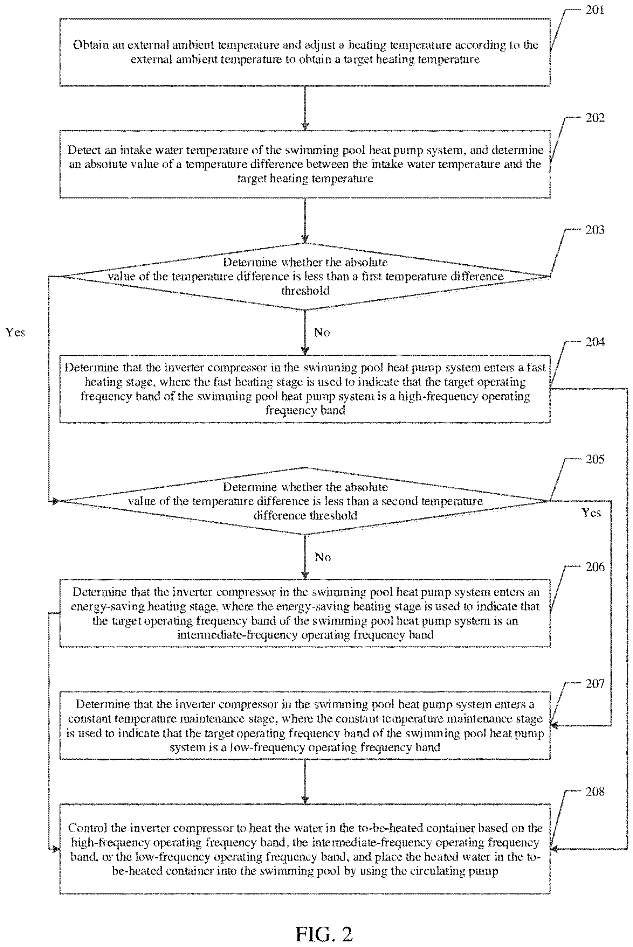

FIG. 2 is another flowchart of a water temperature control method for a swimming pool heat pump system according to an embodiment of the present invention, specifically including:

201. Obtain an external ambient temperature and adjust a heating temperature according to the external ambient temperature to obtain a target heating temperature.

Specifically, the terminal detects a current external ambient temperature by using a preset ambient temperature sensor; if the external ambient temperature is less than or equal to a first ambient temperature threshold, determines a first preset temperature as the target heating temperature; if the external ambient temperature is greater than the first ambient temperature threshold and is less than or equal to a second ambient temperature threshold, determines a corresponding target heating temperature according to a preset curve, where the preset curve is used to indicate an inverse ratio relationship between the target heating temperature and the ambient temperature; and if the external ambient temperature is greater than the second ambient temperature threshold, determines a second preset temperature as the target heating temperature, where the second preset temperature is less than the first preset temperature.

It should be noted that the swimming pool heat pump system is applied to a swimming pool water heating scenario, and the target heating temperature is adjusted in real time for a swimming pool internal water temperature and the external ambient temperature to meet a use requirement. 1. Before a swimming pool is put into use, the swimming pool internal water temperature is relatively low. In this case, there are two types of requirements. One is that the temperature inside the swimming pool is expected to reach a specified temperature as quickly as possible. The other is scheduled heating, where duration may be relatively long, and energy consumption is expected to be low. 2. The swimming pool water temperature heated by the swimming pool heat pump can fluctuate slightly, so that a human body feels comfortable. 3. The swimming pool water temperature can be adjusted automatically according to the external ambient temperature. For example, when the external ambient temperature is relatively high (that is, the weather is relatively hot), the water temperature may be set to be slightly lower than the usual temperature, so that the human body can feel more comfortable and energy can be saved. When the ambient temperature is relatively low (that is, the weather is relatively cold), the target heating temperature may be set to be higher than the usual temperature. When the external ambient temperature is higher, the target heating temperature is set to be lower. The target heating temperature is inversely proportional to the external ambient temperature within a preset range. The preset range is from the first preset temperature to the second preset temperature, and the first preset temperature is greater than the second preset temperature.

A slope of the preset curve is K, as shown in

$$K = \frac{TT1 - TT2}{AT1 - AT2}$$

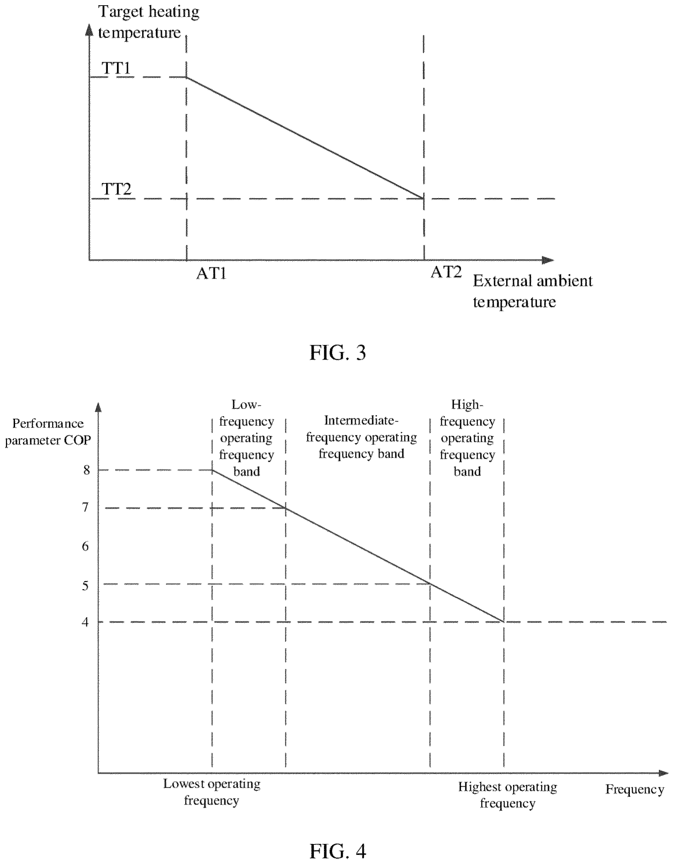

FIG. 3, , where TT1 is the first preset temperature, TT2 is the second preset temperature, AT1 is the first ambient temperature threshold, AT2 is the second ambient temperature threshold, that is, a preset temperature difference is a difference between the first preset temperature and the second preset temperature, an ambient temperature difference is a difference between the first ambient temperature and the second ambient temperature, the preset temperature difference is inversely proportional to the ambient temperature difference, and a value range of K may be [-2, -0.5]. Specifically, when the external ambient temperature is greater than AT2, the inverter compressor of the swimming pool heat pump system operates at a target heating temperature of TT2. When the external ambient temperature is greater than AT1 and is less than or equal to AT2, the inverter compressor of the swimming pool heat pump system operates at the target heating temperature which is a value determined according to the preset curve. When the external ambient temperature is less than or equal to AT1, the inverter compressor of the swimming pool heat pump system operates at a target heating temperature of TT1. Alternatively, the preset curve is an arc (raised to the lower left corner), and the slope K of the curve increases with the ambient temperature, that is, a higher external ambient temperature causes a slower change rate of the target heating temperature, and a lower external ambient temperature causes a faster change rate of the target heating temperature.

According to the foregoing correction to the target heating temperature, according to a principle of the swimming pool heat pump system, each time a difference from the target heating temperature is 1°C, the coefficient of performance (COP) of the swimming pool heat pump system is 2-3% different, and when the water temperature is lower, the COP is higher. Therefore, in this embodiment, the swimming pool heat pump system can be improved to obtain a higher energy efficiency in a case of a higher ambient temperature, thereby further reducing energy consumption.

202. Detect an inlet water temperature of the swimming pool heat pump system, and determine an absolute value of a temperature difference between the inlet water temperature and the target heating temperature.

Specifically, the inlet water temperature of the swimming pool heat pump system is detected, the inlet water temperature of the swimming pool heat pump system is subtracted from the target heating temperature to obtain a difference, and an absolute value of the difference is obtained. Different absolute values of temperature differences also correspond to different operating frequencies of the swimming pool heat pump system. Therefore, different heating manners are separately delimited by setting different temperature difference ranges.

The inlet water temperature of the swimming pool heat pump system may be lower than or equal to the target heating temperature, or may be higher than the target heating temperature. When the inlet water temperature of the swimming pool heat pump system is lower than or equal to the target heating temperature, the difference is a positive value, and the absolute value of the difference is also a positive value. When the inlet water temperature of the swimming pool heat pump system is higher than the target heating temperature, that is, the pool water temperature is over high, the difference is a negative number, and the absolute value must be taken to obtain a positive value.

203. Determine whether the absolute value of the temperature difference is less than a first temperature difference threshold.

The terminal determines whether the absolute value of the temperature difference is less than the first temperature difference threshold.

204. If the absolute value of the temperature difference is greater than or equal to the first temperature difference threshold, determine that the inverter compressor in the swimming pool heat pump system enters a fast heating stage, where the fast heating stage is used to indicate that the target operating frequency band of the swimming pool heat pump system is a high-frequency operating frequency band.

If the absolute value of the temperature difference is greater than or equal to the first temperature difference threshold, the terminal determines that the inverter compressor in the swimming pool heat pump system enters the fast heating stage, where the fast heating stage is used to indicate that the target operating frequency band of the heat pump system is the high-frequency operating frequency band. For example, the first temperature difference threshold is 3°C. When the absolute value of the temperature difference is greater than or equal to 3°C, it may be determined that the temperature difference from the target temperature is relatively large. In this case, the swimming pool water temperature needs to be increased quickly, so that the temperature difference decreases as soon as possible. It is assumed that when the terminal determines that the target heating temperature is 30°C, the swimming pool heat pump system enables a circulating pump, detects that a current inlet water temperature Ti of the heat pump is 20°C, and the absolute value of the temperature difference is 10°C. The temperature difference from the target heating temperature 30°C is relatively large. In this case, the swimming pool water temperature needs to be increased quickly, so that the temperature difference decreases as soon as possible. When the absolute value of the temperature difference is greater than or equal to 3°C, the fast heating stage is entered. At this stage, the inverter compressor is operating in the high frequency band, and generally outputs a heat production amount according to 80%-120% of a maximum heat production amount, that is, $[0.8Q, 1.2Q]$, and a COP operating range is $4 \le COP \le 5$, where Q is the maximum heat production amount of the swimming pool heat pump system.

205. If the absolute value of the temperature difference is less than the first temperature difference threshold, determine whether the absolute value of the temperature difference is less than a second temperature difference threshold.

If the absolute value of the temperature difference is less than the first temperature difference threshold, the terminal continues to determine whether the absolute value of the temperature difference is less than the second temperature difference threshold. For example, the first temperature difference threshold is 3°C, and the second temperature difference threshold is 0.5°C.

206. If the absolute value of the temperature difference is greater than or equal to the second temperature difference threshold and is less than the first temperature difference threshold, determine that the inverter compressor in the swimming pool heat pump system enters an energy-saving heating stage, where the energy-saving heating stage is used to indicate that the target operating frequency band of the swimming pool heat pump system is an intermediate-frequency operating frequency band.

If the absolute value of the temperature difference is greater than or equal to the second temperature difference threshold and is less than the first temperature difference threshold, the terminal determines that the inverter compressor in the swimming pool heat pump system enters the energy-saving heating stage, where the energy-saving heating stage is used to indicate that the target operating frequency band of the swimming pool heat pump system is the intermediate-frequency operating frequency band.

For example, when the absolute value of the temperature difference is greater than 0.5°C and is less than or equal to 3°C, the energy-saving heating stage is entered. At this stage, the inverter compressor in the swimming pool heat pump system operates in the intermediate frequency band, and generally outputs a heat production amount according to 40%-80% of the maximum heat production amount, that is, $(0.4Q, 0.8Q)$, and a COP operating range is $5 < COP < 7$.

207. If the absolute value of the temperature difference is less than the second temperature difference threshold, determine that the inverter compressor in the swimming pool heat pump system enters a constant temperature maintenance stage, where the constant temperature maintenance stage is used to indicate that the target operating frequency band of the swimming pool heat pump system is a low-frequency operating frequency band.

If the absolute value of the temperature difference is less than the second temperature difference threshold, the terminal determines that the inverter compressor in the swimming pool heat pump system enters the constant temperature maintenance stage, where the constant temperature maintenance stage is used to indicate that the target operating frequency band of the swimming pool heat pump system is the low-frequency operating frequency band.

When the absolute value of the temperature difference is less than 0.5°C, the constant temperature maintenance stage is entered. At this stage, the inverter compressor operates in the low frequency band, and usually outputs a heat production amount according to 5%-40% of the maximum heat production amount, that is, [0.05Q, 0.4Q], and the COP operating range is $7 \leq COP \leq 8$. When the absolute value of the temperature difference is less than 0.5°C and the target heating temperature is greater than the actual temperature of the swimming pool water temperature, output is performed according to 5%-20% (including 5% but not including 20%) of the maximum heat production amount. When the absolute value of the temperature difference is less than 0.5°C and the target heating temperature is greater than the actual temperature of the swimming pool water temperature, output is performed according to 20%-40% (including 20% and 40%) of the maximum heat production amount. It should be noted that when heating is performed according to 5% of the maximum heat production amount, the COP corresponding to the swimming pool heat pump system is 8; and when heating is performed according to 40% of the maximum heat production amount, the COP corresponding to the swimming pool heat pump system is 7.

It should be noted that, in the high-frequency operating frequency band, the intermediate-frequency operating frequency band, or the low-frequency operating frequency band, the terminal may further adjust the operating frequency of the inverter compressor in real time, thereby gradually reducing the actual operating frequency, so that the COP is always at a maximum value.

208. Control the inverter compressor to heat the water in the to-be-heated container based on the high-frequency operating frequency band, the intermediate-frequency operating frequency band, or the low-frequency operating frequency band, and place the heated water in the to-be-heated container into the swimming pool by using the circulating pump.

Specifically, the terminal adjusts a real-time operating frequency of the inverter compressor according to a change of the absolute value of the temperature difference, and heats the water in the to-be-heated container according to the real-time operating frequency, where the real-time operating frequency is the high-frequency operating frequency band, the intermediate-frequency operating frequency band, or the low-frequency operating frequency band; when the inverter compressor operates in the high-frequency operating frequency band, determines that a value range of a current heat production amount of the swimming pool heat pump system is [0.8Q, 1.2Q], and a value range of a coefficient of performance (COP) corresponding to the swimming pool heat pump system is $4 \leq COP \leq 5$, where Q is a maximum heat production amount of the swimming pool heat pump system; when the inverter compressor operates in the intermediate-frequency operating frequency band, determines that the value range of the current heat production amount of the swimming pool heat pump system is (0.4Q, 0.8Q), and the value range of the coefficient of performance (COP) corresponding to the swimming pool heat pump system is $5 < COP < 7$; and when the inverter compressor operates in the low-frequency operating frequency band, determines that the value range of the current heat production amount of the swimming pool heat pump system is [0.05Q, 0.4Q], and the value range of the coefficient of performance (COP) corresponding to the swimming pool heat pump system is $7 \leq COP \leq 8$, as shown in FIG. 4.

When the temperature difference is relatively large (not less than the first temperature difference threshold), the terminal first controls the inverter compressor to operate in the high-frequency operating frequency band, where as the inverter compressor operates, the temperature difference gradually decreases (less than the second temperature difference threshold); controls the inverter compressor to operate in the intermediate-frequency operating frequency band; and when the temperature difference is maintained around the target heating temperature (for example, 0.5°C above or below the target heating temperature), controls the inverter compressor to operate in the low-frequency operating frequency band and maintain the low-frequency operating frequency band, so that the COP of the heat pump system is the maximum value at each operating stage.

In this embodiment, a characteristic that the inverter compressor in the swimming pool heat pump system can adjust the heat production output amount is fully used. According to an actual water temperature situation of the swimming pool, the maximum heat production amount is obtained by increasing a rotation speed of the compressor in a low temperature interval, so that the water temperature is rapidly increased. In this case, because the water temperature is relatively low, a condensing temperature is relatively low, and the COP is maintained at a relatively high level. As the water temperature rises to an intermediate temperature interval, condensation efficiency decreases. If a higher rotation speed is maintained, the COP decreases. Therefore, by reducing the rotation speed of the compressor (reducing frequency), a gas displacement volume of the compressor decreases. In this way, a heat exchange area between an evaporator and a condenser is fully used to compensate for a COP decrease caused by raising of the water temperature, and relatively low frequency is used to obtain the maximum COP. In the intermediate temperature interval, as the water temperature rises, the frequency of the compressor decreases further. Finally, when the water temperature reaches the target temperature, the frequency of the compressor just outputs the most appropriate frequency, so that the heat provided by the swimming pool heat pump can balance the heat dissipation loss of the swimming pool water temperature and the outside. In this case, the swimming pool water temperature does not continuously increase at a large temperature difference and fluctuates within a range of $\pm 0.5°C$.

It should be noted that, in this embodiment, the inverter compressor of the swimming pool heat pump system is not stopped, and is always maintained at a relatively low frequency. In this case, the maximum COP can be obtained, the swimming pool water temperature does not fluctuate greatly, and a human body feels more comfortable, thereby avoiding a damage to a service life of a component caused by frequent opening/closing.

In this embodiment of the present invention, the target heating temperature is adjusted according to the external ambient temperature, and the swimming pool water temperature is further adjusted according to the standard heating temperature, so as to increase a coefficient of performance of the swimming pool heat pump system during operation, reduce energy consumption, avoid frequent opening and closing of the swimming pool heat pump system, and increase a service life of the swimming pool heat pump system.

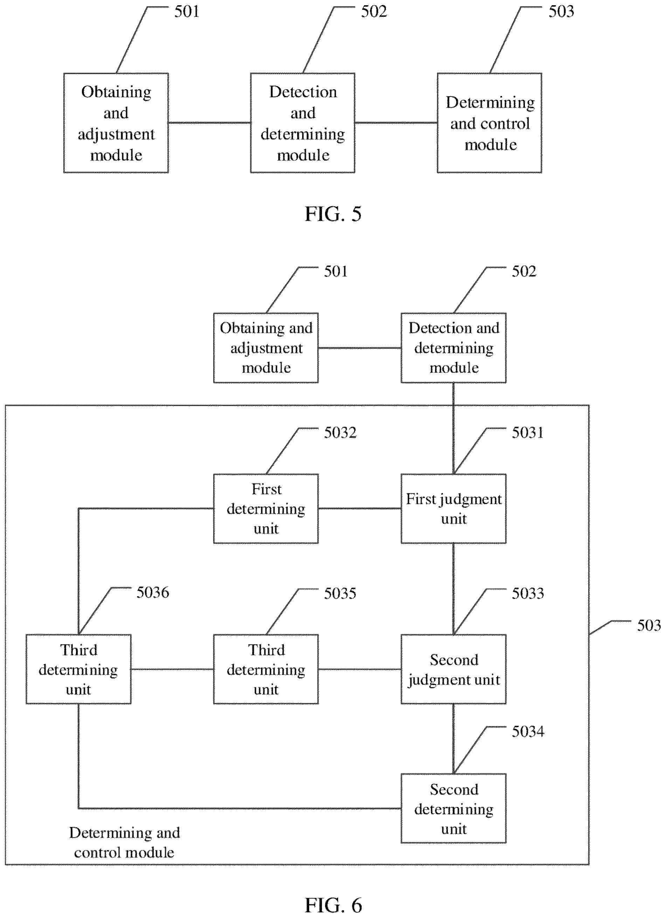

The foregoing describes the water temperature control method for a swimming pool heat pump system in the embodiments of the present invention. The following describes a water temperature control apparatus for a swimming pool heat pump system in the embodiments of the present invention. Referring to FIG. 5, an embodiment of the water temperature control apparatus for a swimming pool heat pump system according to an embodiment of the present invention includes:

an obtaining and adjustment module 501, configured to obtain an external ambient temperature and adjust a heating temperature according to the external ambient temperature to obtain a target heating temperature;

a detection and determining module 502, configured to: detect an inlet water temperature of the swimming pool heat pump system, and determine an absolute value of a temperature difference between the inlet water temperature and the target heating temperature; and

a determining and control module 503, configured to: determine a target operating frequency band of the swimming pool heat pump system according to the absolute value of the temperature difference, control the inverter compressor in the swimming pool heat pump system to heat water in a to-be-heated container based on the target operating frequency band, and place heated water in the to-be-heated container into the swimming pool by using a circulating pump.

In this embodiment of the present invention, the target heating temperature is adjusted according to the external ambient temperature, and the swimming pool water temperature is further adjusted according to the standard heating temperature, so as to increase a coefficient of performance of the swimming pool heat pump system during operation, reduce energy consumption, avoid frequent opening and closing of the swimming pool heat pump system, and increase a service life of the swimming pool heat pump system.

Referring to FIG. 6, another embodiment of a water temperature control apparatus for a swimming pool heat pump system according to an embodiment of the present invention includes:

an obtaining and adjustment module 501, configured to obtain an external ambient temperature and adjust a heating temperature according to the external ambient temperature to obtain a target heating temperature;

a detection and determining module 502, configured to: detect an inlet water temperature of the swimming pool heat pump system, and determine an absolute value of a temperature difference between the inlet water temperature and the target heating temperature; and

a determining and control module 503, configured to: determine a target operating frequency band of the swimming pool heat pump system according to the absolute value of the temperature difference, control the inverter compressor in the swimming pool heat pump system to heat water in a to-be-heated container based on the target operating frequency band, and place heated water in the to-be-heated container into the swimming pool by using a circulating pump.

Optionally, the obtaining and adjustment module 501 is specifically configured to:

detect a current external ambient temperature by using a preset ambient temperature sensor;

if the external ambient temperature is less than or equal to a first ambient temperature threshold, determine a first preset temperature as the target heating temperature;

if the external ambient temperature is greater than the first ambient temperature threshold and is less than or equal to a second ambient temperature threshold, determine a corresponding target heating temperature according to a preset curve, where the preset curve is used to indicate an inverse ratio relationship between the target heating temperature and the ambient temperature; and

if the external ambient temperature is greater than the second ambient temperature threshold, determine a second preset temperature as the target heating temperature, where the second preset temperature is less than the first preset temperature.

Optionally, a slope of the preset curve is *K*,

$$K = \frac{TT1 - TT2}{AT1 - AT2}$$

, where *TT*1 is the first preset temperature, *TT*2 is the second preset temperature, *AT*1 is the first ambient temperature threshold, and *AT*2 is the second ambient temperature threshold.

Optionally, the determining and control module 503 includes:

a first judgment unit 5031, configured to determine whether the absolute value of the temperature difference is less than a first temperature difference threshold;

a first determining unit 5032, configured to: if the absolute value of the temperature difference is greater than or equal to the first temperature difference threshold, determine that the inverter compressor in the swimming pool heat pump system enters a fast heating stage, where the fast heating stage is used to indicate that the target operating frequency band of the swimming pool heat pump system is a high-frequency operating frequency band;

a second judgment unit 5033, configured to: if the absolute value of the temperature difference is less than the first temperature difference threshold, determine whether the absolute value of the temperature difference is less than a second temperature difference threshold;

a second determining unit 5034, configured to: if the absolute value of the temperature difference is greater than or equal to the second temperature difference threshold, determine that the inverter compressor in the swimming pool heat pump system enters an energy-saving heating stage, where the energy-saving heating stage is used to indicate that the target operating frequency band of the swimming pool heat pump system is an intermediate-frequency operating frequency band;

a third determining unit 5035, configured to: if the absolute value of the temperature difference is less than the second temperature difference threshold, determine that the inverter compressor in the swimming pool heat pump system enters a constant temperature maintenance stage, where the constant temperature maintenance stage is used to indicate that the target operating frequency band of the swimming pool heat pump system is a low-frequency operating frequency band; and

a heating unit 5036 is configured to: control the inverter compressor to heat the water in the to-be-heated container based on the high-frequency operating frequency band, the intermediate-frequency operating frequency band, or the low-frequency operating frequency band, and place the heated water in the to-be-heated container into the swimming pool by using the circulating pump.

Optionally, the first temperature difference threshold is 3°C, and the second temperature difference threshold is 0.5°C.

Optionally, the heating unit 5036 is specifically configured to:

adjust a real-time operating frequency of the inverter compressor according to a change of the absolute value of the temperature difference, and heat the water in the to-be-heated container according to the real-time operating frequency, where the real-time operating frequency is the high-frequency operating frequency band, the intermediate-frequency operating frequency band, or the low-frequency operating frequency band;

when the inverter compressor operates in the high-frequency operating frequency band, determine that a value range of a current heat production amount of the swimming pool heat pump system is [0.8Q, 1.2Q], and a value range of a coefficient of performance (COP) corresponding to the swimming pool heat pump system is $4 \leq COP \leq 5$, where Q is a maximum heat production amount of the swimming pool heat pump system;

when the inverter compressor operates in the intermediate-frequency operating frequency band, determine that the value range of the current heat production amount of the swimming pool heat pump system is (0.4Q, 0.8Q), and the range of the coefficient of performance (COP) corresponding to the swimming pool heat pump system is $5 < COP < 7$; and

when the inverter compressor operates in the low-frequency operating frequency band, determining that the value range of the current heat production amount of the swimming pool heat pump system is [0.05Q, 0.4Q], and the range of the coefficient of performance (COP) corresponding to the swimming pool heat pump system is $7 \leq COP \leq 8$.

Optionally, when the inverter compressor operates in the low-frequency operating frequency band, the inverter compressor keeps operating.

In this embodiment of the present invention, the target heating temperature is adjusted according to the external ambient temperature, and the swimming pool water temperature is further adjusted according to the standard heating temperature, so as to increase a coefficient of performance of the swimming pool heat pump system during operation, reduce energy consumption, avoid frequent opening and closing of the swimming pool heat pump system, and increase a service life of the swimming pool heat pump system.

FIG. 5 and FIG. 6 describe in detail the water temperature control apparatus for a swimming pool heat pump system in the embodiments of the present invention from a perspective of a modular functional entity.

The following describes in detail a water temperature control device for a swimming pool heat pump system in the embodiments of the present invention from a perspective of hardware processing.

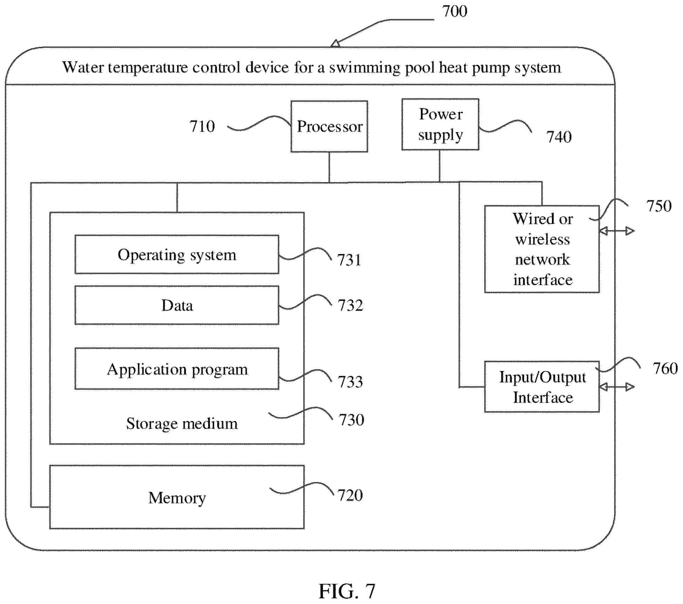

FIG. 7 is a schematic structural diagram of a water temperature control device for a swimming pool heat pump system according to an embodiment of the present invention. The water temperature control device 700 for a swimming pool heat pump system may vary greatly according to configuration or performance. The water temperature control device 700 may include one or more processors (central processing unit, CPU) 710 (for example, one or more processors) and a memory 720, and one or more storage media 730 (for example, one or more mass storage devices) storing an application program 733 or data 732. The memory 720 and the storage medium 730 may be used for transient storage or persistent storage. The program stored in the storage medium 730 may include one or more modules (not shown in the figure), and each module may include a series of instruction operations for the water temperature control device 700 for a swimming pool heat pump system. Further, the processor 710 may be configured to communicate with the storage medium 730 and perform a series of instruction operations in the storage medium 730 on the water temperature control device 700 for a swimming pool heat pump system.

The water temperature control device 700 for a swimming pool heat pump system may further include one or more power supplies 740, one or more wired or wireless network interfaces 750, one or more input/output interfaces 760, and/or one or more operating systems 731, such as Windows Server, Mac OS X, Unix, Linux, and FreeBSD. A person skilled in the art may understand that a structure of the water temperature control device for a swimming pool heat pump system shown in FIG. 7 does not constitute a limitation on the water temperature control device for a swimming pool heat pump system, which may include more or fewer components than those shown in the figure, or combine some components, or have different component arrangements.

The present invention further provides a computer readable storage medium. The computer readable storage medium may be a non-volatile computer readable storage medium. The computer readable storage medium may also be a volatile computer readable storage medium. The computer readable storage medium stores instructions. When the instructions run on a computer, the computer performs the steps of the water temperature control method for a swimming pool heat pump system.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

When the integrated unit is implemented in the form of a software functional unit and sold or used as an independent product, the integrated unit may be stored in a computer readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The storage medium includes: any medium that can store program code, such as a USB flash drive, a removable hard disk, a read-only memory (read-only memory, ROM), a random access memory (random access memory, RAM), a magnetic disk, or an optical disc.

**Claims**

1. A water temperature control method for a swimming pool heat pump system, wherein the heat pump system comprises an inverter compressor, and the method comprises:

   101, 201: obtaining an external ambient temperature and adjusting a heating temperature according to the external ambient temperature to obtain a target heating temperature;
   102, 202: detecting an inlet water temperature of the swimming pool heat pump system, and determining an absolute value of a temperature difference between the inlet water temperature and the target heating temperature; and
   103: determining a target operating frequency band of the swimming pool heat pump system according to the absolute value of the temperature difference, controlling the inverter compressor in the swimming pool heat pump system to heat water in a to-be-heated container based on the target operating frequency band, and placing heated water in the to-be-heated container into the swimming pool by using a circulating pump,
   wherein the obtaining an external ambient temperature and adjusting a heating temperature according to the external ambient temperature to obtain a target heating temperature comprises:

      detecting a current external ambient temperature by using a preset ambient temperature sensor;
      if the external ambient temperature is less than or equal to a first ambient temperature threshold, determining a first preset temperature as the target heating temperature;

if the external ambient temperature is greater than the first ambient temperature threshold and is less than or equal to a second ambient temperature threshold, determining a corresponding target heating temperature according to a preset curve, wherein the preset curve is used to indicate an inverse ratio relationship between the target heating temperature and the ambient temperature; and

if the external ambient temperature is greater than the second ambient temperature threshold, determining a second preset temperature as the target heating temperature, wherein the second preset temperature is less than the first preset temperature, wherein:

a slope of the preset curve is *K*,

$$K = \frac{TT1 - TT2}{AT1 - AT2}$$

, wherein *TT1* is the first preset temperature, *TT2* is the second preset temperature, *AT1* is the first ambient temperature threshold, and *AT2* is the second ambient temperature threshold.

2. The water temperature control method for a swimming pool heat pump system according to claim 1, wherein the determining a target operating frequency band of the swimming pool heat pump system according to the absolute value of the temperature difference, controlling the inverter compressor in the swimming pool heat pump system to heat water in a to-be-heated container based on the target operating frequency band, and placing heated water in the to-be-heated container into the swimming pool by using a circulating pump comprises:

203: determining whether the absolute value of the temperature difference is less than a first temperature difference threshold;
204: if the absolute value of the temperature difference is greater than or equal to the first temperature difference threshold, determining that the inverter compressor in the swimming pool heat pump system enters a fast heating stage, wherein the fast heating stage is used to indicate that the target operating frequency band of the swimming pool heat pump system is a high-frequency operating frequency band;
205: if the absolute value of the temperature difference is less than the first temperature difference threshold, determining whether the absolute value of the temperature difference is less than a second temperature difference threshold;
206: if the absolute value of the temperature difference is greater than or equal to the second temperature difference threshold, determining that the inverter compressor in the swimming pool heat pump system enters an energy-saving heating stage, wherein the energy-saving heating stage is used to indicate that the target operating frequency band of the swimming pool heat pump system is an intermediate-frequency operating frequency band;
207: if the absolute value of the temperature difference is less than the second temperature difference threshold, determining that the inverter compressor in the swimming pool heat pump system enters a constant temperature maintenance stage, wherein the constant temperature maintenance stage is used to indicate that the target operating frequency band of the swimming pool heat pump system is a low-frequency operating frequency band; and
208: controlling the inverter compressor to heat the water in the to-be-heated container based on the high-frequency operating frequency band, the intermediate-frequency operating frequency band, or the low-frequency operating frequency band, and placing the heated water in the to-be-heated container into the swimming pool by using the circulating pump.

3. The water temperature control method for a swimming pool heat pump system according to claim 2, wherein the first temperature difference threshold is 3°C, and the second temperature difference threshold is 0.5°C.

4. The water temperature control method for a swimming pool heat pump system according to claim 2, wherein the controlling the inverter compressor to heat the water in the to-be-heated container based on the high-frequency operating frequency band, the intermediate-frequency operating frequency band, or the low-frequency operating frequency band, and placing the heated water in the to-be-heated container into the swimming pool by using the circulating pump comprises:

adjusting a real-time operating frequency of the inverter compressor according to a change of the absolute value of the temperature difference, and heating the water in the to-be-heated container according to the real-time operating frequency, wherein the real-time operating frequency is the high-frequency operating frequency band, the intermediate-frequency operating frequency band, or the low-frequency operating frequency band;
when the inverter compressor operates in the high-frequency operating frequency band, determining that a value range of a current heat production amount of the swimming pool heat pump system is [0.8Q, 1.2Q], and a value range of a coefficient of performance (COP) corresponding to the swimming pool heat pump system is $4 \le COP \le 5$, wherein Q is a maximum heat production amount of the swimming pool heat pump system;

when the inverter compressor operates in the intermediate-frequency operating frequency band, determining that the value range of the current heat production amount of the swimming pool heat pump system is (0.4Q, 0.8Q), and the value range of the coefficient of performance (COP) corresponding to the swimming pool heat pump system is $5 < COP < 7$; and

when the inverter compressor operates in the low-frequency operating frequency band, determining that the value range of the current heat production amount of the swimming pool heat pump system is [0.05Q, 0.4Q], and the value range of the coefficient of performance (COP) corresponding to the swimming pool heat pump system is $7 \le COP \le 8$.

5. The water temperature control method for a swimming pool heat pump system according to claim 4, wherein:

when the inverter compressor operates in the low-frequency operating frequency band, the inverter compressor keeps operating.

6. A water temperature control apparatus for a swimming pool heat pump system, comprising:

an obtaining and adjustment module (501), configured to obtain an external ambient temperature and adjust a heating temperature according to the external ambient temperature to obtain a target heating temperature;

a detection and determining module (502), configured to: detect an inlet water temperature of the swimming pool heat pump system, and determine an absolute value of a temperature difference between the inlet water temperature and the target heating temperature; and

a determining and control module (503), configured to: determine a target operating frequency band of the swimming pool heat pump system according to the absolute value of the temperature difference, control the inverter compressor in the swimming pool heat pump system to heat water in a to-be-heated container based on the target operating frequency band, and place heated water in the to-be-heated container into the swimming pool by using a circulating pump, the obtaining and adjustment module is specifically configured to: detect a current external ambient temperature by using a preset ambient temperature sensor; if the external ambient temperature is less than or equal to a first ambient temperature threshold, determine a first preset temperature as the target heating temperature; if the external ambient temperature is greater than the first ambient temperature threshold and is less than or equal to a second ambient temperature threshold, determine a corresponding target heating temperature according to a preset curve, where the preset curve is used to indicate an inverse ratio relationship between the target heating temperature and the ambient temperature; and if the external ambient temperature is greater than the second ambient temperature threshold, determine a second preset temperature as the target heating temperature, where the second preset temperature is less than the first preset temperature,

wherein a slope of the preset curve is $K$,

$$K = \frac{TT1 - TT2}{AT1 - AT2}$$

, where $TT1$ is the first preset temperature, $TT2$ is the second preset temperature, $AT1$ is the first ambient temperature threshold, and $AT2$ is the second ambient temperature threshold.

7. A water temperature control device (700) for a swimming pool heat pump system, wherein the water temperature control device (700) for a swimming pool heat pump system comprises a memory (720) and at least one processor (710), the memory stores instructions, and the memory and the at least one processor are interconnected by using a line; and

the at least one processor (710) invokes the instructions in the memory (720), so that the water temperature control device (700) for a swimming pool heat pump system performs the water temperature control method for a swimming pool heat pump system according to any one of claims 1 to 5.

8. A computer readable storage medium, wherein the computer readable storage medium stores instructions, and when the instructions are executed by a processor, the water temperature control method for a swimming pool heat pump system according to any one of claims 1 to 5 is implemented.

**Patentansprüche**

1. Verfahren zur Regelung der Wassertemperatur für ein Schwimmbad-Wärmepu mpensystem, wobei das Wärmepumpensystem einen Inverterkompressor sowie das fol gende Verfahren umfasst:

101, 201: erfassen einer externen Umgebungstemperatur und Anpassen einer Hei ztemperatur gemäß der externen Umgebungstemperatur, um eine Soll-Heiztemperatur zu erzielen;

102, 202: erkennen einer Einlasswassertemperatur des Schwimmbad-Wärmepump ensystems und Bestimmen eines Absolutwerts einer Temperaturdifferenz zwischen der Einlasswassertemperatur und der Soll-Heiztemperatur; und

103: bestimmen eines Soll-Betriebsfrequenzbands des Schwimmbad-Wärmepump ensystems gemäß dem Absolutwert der Temperaturdifferenz, Steuern des Inverterkomp ressors im Schwimmbad-Wärmepumpensystem, um Wasser in einem zu beheizenden Behälter auf der Grundlage des Soll-Betriebsfrequenzbandes zu erhitzen, und Einleiten von erhitztem Wasser in den zu beheizenden Behälter in das Schwimmbad unter Ver wendung einer Umwälzpumpe, wobei das Erfassen einer externen Umgebungstemperatur sowie das Anpassen ein er Heiztemperatur gemäß der externen Umgebungstemperatur, um eine Soll-Heiztemp eratur zu erhalten, umfasst:

erfassen einer aktuellen externen Umgebungstemperatur durch Verwendung eines voreingestellten Umgebungstemperatursensors;

wenn die externe Umgebungstemperatur kleiner oder gleich einem ersten Umgeb ungstemperaturschwellenwert ist, Bestimmen einer ersten voreingestellten Temperatur als Soll-Heiztemperatur;

wenn die externe Umgebungstemperatur größer als der erste Umgebungstemperat urschwellenwert und kleiner oder gleich ei- nem zweiten Umgebungstemperatur- schwell enwert ist, Bestimmen einer entsprechenden Soll-Heiztemperatur gemäß einer voreing estellten Kurve, wobei die voreingestellte Kurve verwendet wird, um eine inverse Ver hältnisbeziehung zwischen der Soll-Heiztemperatur und der Umgebungstemperatur an zuzeigen; und

wenn die externe Umgebungstemperatur größer als der zweite Umgebungstemper aturschwellenwert ist, Bestimmen einer zweiten voreingestellten Temperatur als Soll-Heiztemperatur, wobei die zweite voreingestellte Temperatur kleiner als die erste vorei ngestellte Temperatur ist,

wobei:

$K$ eine Steigung der voreingestellten Kurve

$$K = \frac{TT1 - TT2}{AT1 - AT2}$$

ist,                    , wobei $TT1$ die erste

voreingestellte Temperatur ist, $TT2$ die zweite voreingestellte Temperatur ist, $AT1$ der erste Schwellenwert der Umgebungstemperatur ist und $AT2$ der zweite Schwellenwert der Umgebungstemperatur ist.

2.  Verfahren zur Regelung der Wassertemperatur für ein Schwimmbad-Wärmepu mpensystem gemäß Anspruch 1, wobei das Bestimmen eines Soll-Betriebsfrequenzban des des Schwimmbad-Wärmepumpensystems gemäß dem Absolutwert der Temperatur differenz, das Steuern des Inverterkompressors im Schwimmbad-Wärmepumpensyste m zur Erhitzung des Wassers in einem zu beheizenden Behälter basierend auf dem Sol 1-Betriebsfrequenzband und des Einlasses des erhitzten Wassers in den zu erhitzenden Behälter in das Schwimmbad anhand einer Umwälzpumpe umfasst:

203: bestimmen, ob der Absolutwert der Temperaturdifferenz kleiner als ein erste r Temperaturdifferenzschwellenwert ist;

204: wenn der Absolutwert der Temperaturdifferenz größer oder gleich dem erste n Temperaturdifferenzschwellenwert ist, Bestimmen, dass der Inverterkompressor im Schwimmbad-Wärmepumpensystem in eine Schnellheizstufe eintritt, wobei die Schnel lheizstufe verwendet wird, um anzuzeigen, dass es sich beim Soll-Betriebsfrequenzban d des Schwimmbad-Wärmepumpensystems um ein Hochfrequenz-Betriebsfrequenzba nd handelt;

205: wenn der Absolutwert der Temperaturdifferenz kleiner als der erste Tempera turdifferenz-Schwellenwert ist, Bestimmen, ob der Absolutwert der Temperaturdiffere nz kleiner als ein zweiter Temperaturdifferenz-Schwellenwert ist;

206: wenn der Absolutwert der Temperaturdifferenz größer oder gleich dem zwei ten Temperaturdifferenz-Schwellenwert ist, Bestimmen, dass der Inverterkompressor i n dem Schwimmbad-Wärmepumpensystem in eine energiesparende Heizstufe eintritt, wobei die energiesparende Heizstufe verwendet wird, um anzuzeigen, dass es sich bei m Soll-Betriebsfrequenzband des Schwimmbad-Wärmepumpensystems um ein Mittelf requenz-Betriebsfrequenzband handelt;

207: wenn der Absolutwert der Temperaturdifferenz kleiner als der zweite Tempe raturdifferenz-Schwellenwert ist, Bestimmen, dass der Inverterkompressor in dem Sch wimmbad-Wärmepumpensystem in eine Konstanttemperatur-Aufrechterhaltungs-Ener giesparheizstufe eintritt, wobei die Energiesparheizstufe verwendet wird, um anzuzeige n, dass das Soll-Betriebsfrequenzband des Schwimmbadwärmepumpensystems ein Ni ederfrequenz-Betriebsfrequenzband ist; und

208: steuern des Inverterkompressors, um das Wasser in dem zu beheizenden Beh älter auf Basis des Hochfrequenz-Betriebsfrequenzbandes, des Mittelfrequenz-Betriebs frequenzbandes oder des Niederfrequenz-Betriebsfrequenzbandes zu erhitzen, und Ein bringen des erhitzten Wassers in dem zu beheizenden Behälter in das Schwimmbad unt er Verwendung der Umwälzpumpe.

3. Verfahren zur Regelung der Wassertemperatur für ein Schwimmbad-Wärmepu mpensystem gemäß Anspruch 2, wobei der erste Temperaturdifferenzschwellenwert 3° C und der zweite Temperaturdifferenzschwellenwert 0,5°C ist.

4. Verfahren zur Regelung der Wassertemperatur für ein Schwimmbad-Wärmepu mpensystem gemäß Anspruch 2, wobei das Steuern des Inverterkompressors zum Erwä rmen des Wassers in dem zu beheizenden Behälter gemäß des Hochfrequenz-Betriebsf requenzbandes, des Mittelfrequenz-Betriebsfrequenzbandes oder des Niederfrequenz-Betriebsfrequenzbandes und des Einbringens des erhitzten Wassers in den zu erhitzend en Behälter in das Schwimmbad anhand einer Umwälzpumpe umfasst:

anpassen einer Echtzeit-Betriebsfrequenz des Inverterkompressors gemäß einer Ä nderung des Absolutwerts der Temperaturdifferenz, und das Erhitzen des Wassers in d en zu beheizenden Behälter gemäß der Echtzeit-Betriebsfrequenz, wobei es sich bei de r Echtzeit-Betriebsfrequenz um das Hochfrequenz-Betriebsfrequenzband, das Mittelfre quenz-Betriebsfrequenzband oder das Niederfrequenz-Betriebsfrequenzband handelt;

wenn der Inverterkompressor im Hochfrequenz-Betriebsfrequenzband arbeitet, wi rd bestimmt, dass ein Wertebereich der aktuellen Wärmeerzeugungsmenge des Schwi mmbad-Wärmepumpensystems [0,8Q, 1,2Q] ist und ein Wertebereich des Leistungsko effizienten (COP), der dem Schwimmbad-Wärmepumpensystem entspricht, $4 \leq COP \leq 5$ ist, wobei es sich bei Q um die maximale Wärmeerzeugungsmenge des Schwimmb ad-Wärmepumpensystems handelt;

wenn der Inverterkompressor im Mittelfrequenz-Betriebsfrequenzband arbeitet, w ird bestimmt, dass der Wertebereich der aktuellen Wärmeproduktionsmenge des Schwi mmbad-Wärmepumpensystems (0,4Q, 0,8Q) ist und der Wertebereich der Leistungsza hl (COP), der dem Schwimmbad-Wärmepumpensystem entspricht, $5 < COP < 7$ ist; un d

wenn der Inverterkompressor im Niederfrequenz- Betriebsfrequenzband arbeitet, wird bestimmt, dass der Wertebereich der aktuellen Wärmeproduktionsmenge des Sch wimmbad-Wärmepumpensystems [0,05Q, 0,4Q] ist und der Wertebereich der Leistung szahl (COP), der dem Schwimmbad-Wärmepumpensystem entspricht, $7 \leq COP \leq 8$ ist

5. Verfahren zur Regelung der Wassertemperatur für ein Schwimmbad-Wärmepu mpensystem gemäß Anforderung 4, wobei:
wenn der Inverterkompressor im Niederfrequenz-Betriebsfrequenzbereich arbeitet , der Inverterkompressor weiterarbeitet.

6. Vorrichtung zur Regelung der Wassertemperatur für ein Schwimmbad-Wärme pumpensystem, umfassend:

ein Erfassungs- und Anpassungsmodul (501), das so konfiguriert ist, dass es eine externe Umgebungstemperatur erfasst und eine Heiztemperatur entsprechend der exter nen Umgebungstemperatur anpasst, um eine Soll-Heiztemperatur zu erhalten;
ein Erkennungs- und Bestimmungsmodul (502), das konfiguriert ist, um: die Einl asswassertemperatur des Schwimmbad-Wärmepumpensystems zu erfassen und den Ab solutwert einer Temperaturdifferenz zwischen der Einlasswassertemperatur und der So ll-Heiztemperatur zu bestimmen; sowie

ein Erkennungs- und Steuermodul (503), das konfiguriert ist, um: ein Soll-Betrie bsfrequenzband des Schwimmbad-Wärmepumpensystems gemäß dem Absolutwert der Temperaturdifferenz zu bestimmen, den Inverterkompressor im Schwimmbad-Wärme pumpensystem zu steuern, um Wasser in einem zu beheizenden Behälter gemäß des So ll-Betriebsfrequenzbandes zu erhitzen, und erhitztes Wasser in den zu beheizenden Be hälter in das Schwimmbad anhand einer Umwälzpumpe einzubringen,
das Erfasungs- und Anpassungsmodul ist spezifisch konfiguriert, um: eine aktuell e externe Umgebungstemperatur anhand der Verwendung eines voreingestellten Umge bungstemperatursensors zu erfassen; wenn die externe Umgebungstemperatur kleiner oder gleich einer ersten Umgebungstemperaturschwelle ist, Bestimmen einer erste vor eingestellte Temperatur als Soll-Heiztemperatur; wenn die externe Umgebungstempera tur größer als der erste Umgebungstemperaturschwellenwert und kleiner oder gleich ei nem zweiten Umgebungstemperaturschwellenwert ist, Bestimmen einer entsprechende n Soll-Heiztemperatur gemäß einer voreingestellten Kurve, wobei die voreingestellte Kurve verwendet wird, um eine inverse Verhältnisbeziehung zwischen der Soll-Heiztemperatur und der Umgebungstemperatur anzuzeigen; und wenn die externe Umgebung stemperatur größer als der zweite Umgebungstemperatur-Schwellenwert ist, eine zweit e voreingestellte Temperatur als Soll-Heiztemperatur bestimmt wird, wobei die zweite voreingestellte Temperatur kleiner als die erste voreingestellte Temperatur ist,

wobei $K$ eine Steigung der voreingestellten Kurve ist,

$$K = \frac{TT1 - TT2}{AT1 - AT2}$$

, wobei $TT1$ di e erste voreingestellte Temperatur ist, $TT2$ die zweite voreingestellte Temperatur ist, $A T1$ der erste Schwellenwert der Umgebungstemperatur ist und $AT2$ der zweite Schwell enwert der Umgebungstemperatur ist.

7. Eine Wassertemperatur-Steuerungsvorrichtung (700) für ein Schwimmbad-Wär mepumpensystem, wobei die Wassertemperatur-Steuerungsvorrichtung (700) eines Sc hwimmbad-Wärmepumpensystems einen Speicher (720) und mindestens einen Prozes sor (710) umfasst, wobei derer Speicher Anweisungen speichert, und der Speicher ist mit dem mindestens einen Prozessor über eine Leitung miteinander verbunden; und der mindestens eine Prozessor (710) die Anweisungen im Speicher (720) aufruft, sodass die Wassertemperatur-Steuerungsvorrichtung (700) für ein Schwimmbad-Wär mepumpensystem das Wassertemperaturregelungsverfahren für ein Schwimmbad-Wär mepumpensystem gemäß einem der Anforderungen 1 bis 5 ausführt.

8. Ein computerlesbares Speichermedium, wobei das computerlesbare Speicherme dium Anweisungen speichert und, wenn die Anweisungen von einem Prozessor ausgef ührt werden, das Wassertemperaturregelverfahren für ein Schwimmbad-Wärmepumpe nsystem gemäß einem der Ansprüche 1 bis 5 ausgeführtwird.

**Revendications**

1. Méthode de contrôle de la température de l'eau pour un système de pompe à chaleur de piscine, dans lequel le système de pompe à chaleur est équipé d'un compresseur à onduleur. La méthode comprend :

    101, 201 : obtenir une température ambiante externe et réguler la température de chauffage en fonction de la température ambiante externe afin d'obtenir une température de chauffage cible ;
    102, 202 : détecter la température de l'eau d'entrée du système de pompe à chaleur de la piscine, et déterminer la valeur absolue d'une différence de température entre la température de l'eau d'entrée et la température de chauffage cible ; et
    103 : déterminer une bande de fréquence de fonctionnement cible du système de pompe à chaleur de la piscine en fonction de la valeur absolue de la différence de température, contrôler le compresseur à onduleur dans le système de pompe à chaleur de la piscine afin de réchauffer l'eau dans un conteneur de chauffage sur la base de la bande de fréquence de fonctionnement cible, et placer l'eau chauffée dans le conteneur de chauffage dans la piscine à l'aide d'une pompe de recirculation, où la procédure d'obtention d'une température ambiante externe et de réglage de la température de chauffage en fonction de la température ambiante externe pour obtenir une température de chauffage cible comprend :

    la détection de la température ambiante externe actuelle à l'aide d'un capteur de température ambiante prédéfini ;
    si la température ambiante extérieure est inférieure ou égale à un premier seuil de température ambiante, la définition de la première température préréglée comme température de chauffage cible ;
    si la température ambiante extérieure est supérieure au premier seuil de température ambiante mais inférieure ou égale à un deuxième seuil de température ambiante, définition de la température de chauffage cible équivalente selon une courbe prédéfinie, la courbe prédéfinie étant utilisée pour indiquer une relation inverse entre la température de chauffage cible et la température ambiante ; et
    si la température ambiante extérieure est supérieure au deuxième seuil de température ambiante, définition de la deuxième température préréglée comme température de chauffage cible, la deuxième température préréglée étant inférieure à la première température préréglée,
    dans lequel :
    la pente de la courbe prédéfinie soit $K$,

$$K = \frac{TT1 - TT2}{AT1 - AT2}$$

, où $TT1$ représente la première température prédéfinie, $TT2$ la se-

conde température prédéfinie, *AT*1 le premier seuil de température ambiante, et *AT*2 le deuxième seuil de température ambiante.

2. La méthode de contrôle de la température de l'eau pour un système de pompe à chaleur de piscine selon la revendication 1, comprenant la détermination d'une bande de fréquence de fonctionnement cible du système de pompe à chaleur de piscine en fonction de la valeur absolue de la différence de température, le contrôle du compresseur à onduleur dans le système de pompe à chaleur de piscine afin de réchauffer l'eau dans un conteneur de chauffage en fonction de la bande de fréquence de fonctionnement cible, et placer l'eau chauffée dans le conteneur de chauffage dans la piscine à l'aide d'une pompe de recirculation, consiste en ce qui suit :

203 : déterminer si la valeur absolue de la différence de température est inférieure à un premier seuil de différence de température ;

204 : si la valeur absolue de la différence de température est supérieure ou égale au premier seuil de différence de température, déterminant que le compresseur à onduleur du système de pompe à chaleur de la piscine passe à une phase de chauffage rapide, la phase de chauffage rapide étant utilisée pour indiquer que la bande de fréquence de fonctionnement cible du système de pompe à chaleur de la piscine est une bande de fréquence de fonctionnement à haute fréquence ;

205 : si la valeur absolue de la différence de température est inférieure au premier seuil de différence de température, déterminer si la valeur absolue de la différence de température est inférieure à un second seuil de différence de température ;

206 : si la valeur absolue de la différence de température est supérieure ou égale au deuxième seuil de différence de température, déterminer que le compresseur à onduleur du système de pompe à chaleur de piscine passe à une phase de chauffage à économie d'énergie, la phase de chauffage à économie d'énergie étant utilisée pour indiquer que la bande de fréquence de fonctionnement cible du système de pompe à chaleur de piscine est une bande de fréquence de fonctionnement à fréquence intermédiaire ;

207 : si la valeur absolue de la différence de température est inférieure au deuxième seuil de différence de température, déterminer que le compresseur à onduleur du système de pompe à chaleur de la piscine entre dans une phase de maintien de la température constante, dans laquelle la phase de maintien de la température constante est utilisée pour indiquer que la bande de fréquence de fonctionnement cible du système de pompe à chaleur de la piscine est une bande de fréquence de fonctionnement à basse fréquence ; et

208 : contrôler le compresseur à onduleur pour chauffer l'eau dans le réservoir de chauffage en fonction de la bande de fréquence de fonctionnement à haute fréquence, de la bande de fréquence de fonctionnement à fréquence intermédiaire ou de la bande de fréquence de fonctionnement à basse fréquence, et placer l'eau chauffée dans le réservoir de chauffage dans la piscine à l'aide de la pompe de recirculation.

3. Méthode de régulation de la température de l'eau pour un système de pompe à chaleur de piscine selon la revendication 2, dans laquelle le premier seuil de différence de température est de 3°C, et le deuxième seuil de différence de température est de 0,5°C.

4. Méthode de contrôle de la température de l'eau pour un système de pompe à chaleur de piscine selon la revendication 2, dans laquelle le contrôle du compresseur à onduleur pour chauffer l'eau dans le récipient de chauffage en fonction de la bande de fréquence de fonctionnement à haute fréquence, de la bande de fréquence de fonctionnement à fréquence intermédiaire ou de la bande de fréquence de fonctionnement à basse fréquence, et placer l'eau chauffée dans le réservoir de chauffage dans la piscine à l'aide de la pompe de recirculation, consiste en ce qui suit :

régler une fréquence de fonctionnement en temps réel du compresseur à onduleur en fonction de la variation de la valeur absolue de la différence de température, et chauffer l'eau dans le réservoir de chauffage en fonction de la fréquence de fonctionnement en temps réel, la fréquence de service en temps réel correspondant à la bande de fréquence de fonctionnement à haute fréquence, à la bande de fréquence de fonctionnement à fréquence intermédiaire ou à la bande de fréquence de fonctionnement à basse fréquence ;

si le compresseur à onduleur fonctionne dans la bande de fréquence de fonctionnement à haute fréquence, déterminer que la plage de valeurs de la quantité de chaleur actuelle production du système de pompe à chaleur de piscine est [0,8Q, 1,2Q], et qu'une plage de valeurs d'un coefficient de performance (COP) correspondant au système de pompe à chaleur de piscine est $4 \le COP \le 5$, où Q représente la quantité maximale de chaleur produite du système de pompe à chaleur de piscine ;

si le compresseur de l'onduleur fonctionne dans la bande de fréquence de fonctionnement à fréquence intermédiaire, déterminer que la plage de valeurs de la quantité de chaleur actuelle produite du système de pompe à chaleur de piscine est (0,4Q, 0,8Q), et que la plage de valeurs du coefficient de performance (COP) correspondant au système de pompe à chaleur de piscine est de 5 < *COP* < 7 ; et

si le compresseur de l'onduleur fonctionne dans la bande de fréquence de fonctionnement à basse fréquence, déterminer que la plage de valeurs de la quantité de chaleur actuelle produite du système de pompe à chaleur de piscine est [0,05Q, 0,4Q], et que la plage de valeurs du coefficient de performance (COP) correspondant au système de pompe à chaleur de piscine est de $7 \leq COP \leq 8$.

5. Méthode de contrôle de la température de l'eau pour un système de pompe à chaleur de piscine selon la revendication 4, dans laquelle :
si le compresseur à onduleur fonctionne dans la bande de fréquence de fonctionnement à basse fréquence, le compresseur à onduleur continue de fonctionner.

6. Un appareil de contrôle de la température de l'eau pour un système de pompe à chaleur de piscine, comprenant :

un module de calcul et de réglage (501), configuré pour obtenir une température ambiante extérieure et régler la température de chauffage en fonction de la température ambiante extérieure afin d'obtenir une température de chauffage cible ;
un module de détection et de fixation (502), configuré pour : détecter la température de l'eau d'entrée du système de pompe à chaleur de piscine, et déterminer la valeur absolue de différence de température entre la température de l'eau d'entrée et la température de chauffage cible ; et
un module de fixation et de contrôle (503), configuré pour : déterminer une bande de fréquence de fonctionnement cible du système de pompe à chaleur de la piscine en fonction de la valeur absolue de la différence de température, contrôler le compresseur à onduleur dans le système de pompe à chaleur de la piscine pour chauffer l'eau dans un réservoir de chauffage en fonction de la bande de fréquence de fonctionnement cible, et placer l'eau chauffée dans le récipient de chauffage dans la piscine à l'aide d'une pompe de recirculation,
le module de calcul et de réglage est spécifiquement configuré pour : détecter la température ambiante extérieure actuelle à l'aide d'un capteur de température ambiante prédéfini ; si la température ambiante extérieure est inférieure ou égale au premier seuil de température ambiante, définir la première température prédéfinie en tant que température de chauffage cible ; si la température ambiante externe est supérieure au premier seuil de température ambiante et inférieure ou égale au deuxième seuil de température ambiante, définir la température de chauffage cible correspondante en fonction d'une courbe prédéfinie, la courbe prédéfinie étant utilisée pour indiquer la relation inverse entre la température de chauffage cible et la température ambiante ; et si la température ambiante externe est supérieure au deuxième seuil de température ambiante, définir la deuxième température prédéfinie comme température de chauffage cible, la deuxième température prédéfinie étant inférieure à la première température prédéfinie,
dans laquelle la pente de la courbe prédéfinie

$$K = \frac{TT1 - TT2}{AT1 - AT2}$$

soit *K,* , où *TT*1 représente la première température prédéfinie, *TT*2 la seconde température prédéfinie, *AT*1 le premier seuil de température ambiante, et *AT*2 le deuxième seuil de température ambiante.

7. Un appareil de contrôle de la température de l'eau (700) pour un système de pompe à chaleur de piscine, dans lequel l'appareil de contrôle de la température de l'eau (700) pour un système de pompe à chaleur de piscine comporte une mémoire (720) et au moins un processeur (710), la mémoire stocke des instructions, et la mémoire et le moins un processeur sont interconnectés en utilisant une ligne ; et le processeur (710) invoque les instructions dans la mémoire (720), de sorte que le dispositif de contrôle de la température de l'eau (700) pour un système de pompe à chaleur de piscine exécute la méthode de contrôle de la température de l'eau pour un système de pompe à chaleur de piscine selon l'une des revendications 1 à 5.

8. Un support de stockage lisible par ordinateur, dans lequel le support de stockage lisible par ordinateur stocke des instructions, et lorsque les instructions sont exécutées par un processeur, la méthode de contrôle de la température de l'eau pour un système de pompe à chaleur de piscine selon l'une des revendications 1 à 5 est exécutée.

| Obtain an external ambient temperature and adjust a heating temperature according to the external ambient temperature to obtain a target heating temperature | 101 |

| Detect an intake water temperature of the swimming pool heat pump system, and determine an absolute value of a temperature difference between the intake water temperature and the target heating temperature | 102 |

| Determine a target operating frequency band of the swimming pool heat pump system according to the absolute value of the temperature difference, control the inverter compressor in the swimming pool heat pump system to heat water in a to-be-heated container based on the target operating frequency band, and place heated water in the to-be-heated container into the swimming pool by using a circulating pump | 103 |

FIG. 1

201

Obtain an external ambient temperature and adjust a heating temperature according to the external ambient temperature to obtain a target heating temperature

202

Detect an intake water temperature of the swimming pool heat pump system, and determine an absolute value of a temperature difference between the intake water temperature and the target heating temperature

203

Determine whether the absolute value of the temperature difference is less than a first temperature difference threshold

Yes

No

204

Determine that the inverter compressor in the swimming pool heat pump system enters a fast heating stage, where the fast heating stage is used to indicate that the target operating frequency band of the swimming pool heat pump system is a high-frequency operating frequency band

205

Determine whether the absolute value of the temperature difference is less than a second temperature difference threshold

Yes

No

206

Determine that the inverter compressor in the swimming pool heat pump system enters an energy-saving heating stage, where the energy-saving heating stage is used to indicate that the target operating frequency band of the swimming pool heat pump system is an intermediate-frequency operating frequency band

207

Determine that the inverter compressor in the swimming pool heat pump system enters a constant temperature maintenance stage, where the constant temperature maintenance stage is used to indicate that the target operating frequency band of the swimming pool heat pump system is a low-frequency operating frequency band

208

Control the inverter compressor to heat the water in the to-be-heated container based on the high-frequency operating frequency band, the intermediate-frequency operating frequency band, or the low-frequency operating frequency band, and place the heated water in the to-be-heated container into the swimming pool by using the circulating pump

FIG. 2

FIG. 3

FIG. 4

FIG. 5

FIG. 6

700

Water temperature control device for a swimming pool heat pump system

710 — Processor

Power supply — 740

750

Wired or wireless network interface

Operating system — 731

Data — 732

Application program — 733

Storage medium — 730

Input/Output Interface — 760

Memory — 720

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201351998 Y
- CN 107300231 A